# EUROPÄISCHE PATENTSCHRIFT

(11) **EP 2 460 237 B1**
(45) Veröffentlichungstag und Bekanntmachung des Hinweises auf die Patenterteilung: **28.09.2016**
(21) Anmeldenummer: 10736657.7
(22) Anmeldetag: 16.07.2010
(51) Int. Cl.: H01R 25/14

(54) **ANORDNUNG ZUM VERBINDEN VON ZWEI AUFEINANDER FOLGENDEN SCHLEIFLEITUNGSSCHIENEN**
ARRANGEMENT FOR CONNECTING TWO SUCCESSIVE CONTACT LINE RAILS
AGENCEMENT DE RACCORDEMENT DE DEUX RAILS DE LIGNE DE CONTACT SUCCESSIFS

(30) Priorität: 25.07.2009 DE 102009034792
(43) Veröffentlichungstag der Anmeldung: 06.06.2012
(73) Patentinhaber: Terex MHPS GmbH, 40597 Düsseldorf (DE)
(72) Erfinder: LINDENAU, Thomas, 45721 Haltern am See (DE); KREBS, Wolfgang, 58300 Wetter (DE); OEMUS, Klaus-Dieter, 58675 Hemer (DE)
(74) Vertreter: Moser Götze & Partner Patentanwälte mbB
(86) Internationale Anmeldenummer: PCT/EP2010/060309
(87) Internationale Veröffentlichungsnummer: WO 2011/012466

(56) Entgegenhaltungen:
- DE-A1- 10 227 079
- DE-A1- 19 807 792
- JP-U- 55 112 416
- US-A- 2 835 752

## Beschreibung

Die Erfindung betrifft eine Anordnung zum Verbinden von zwei aufeinander folgenden Schleifleitungsschienen, die jeweils aus einem Kunststofflängsprofil und aus mindestens einer daran entlang verlaufenden Stromschiene bestehen, mit mindestens einem die gegenüber liegenden Stromschienenenden der Stromschienen von zwei aufeinander folgenden Schleifleitungsschienen verbindenden Stromschienenverbinder, der die Stromschienenenden der Stromschienen elektrisch und mechanisch verbindet, und mit an den gegenüber liegenden Schienenenden der Schleifleitungsschienen von zwei aufeinander folgenden Schleifleitungsschienen befestigten Zusatzelementen, die die Stromschienenverbinder überdecken.

Es ist allgemein bekannt, dass Schleifleitungen neben sogenannten Schleppleitungen zum Einsatz kommen, wenn bewegbare elektrische Verbraucher - wie beispielsweise Kranlaufkatzen mit einem elektrischen Fahrantrieb und mit einem elektrischen Hubantrieb - mit elektrischer Energie versorgt werden müssen. Andere Einsatzgebiete sind Stromzuführungen für Krane, Einschienenbahnen und Beschickungs- und Bearbeitungsmaschinen.

Aus dem deutschen Patent DE 198 07 792 C2 ist bereits ein Verbinder für zwei aufeinander folgende Schleifleitungen bekannt. Derartige Schleifleitungen bestehen im Wesentlichen aus einem Kunststofflängsprofil, das als Hohlprofil mit einem c-förmigen Querschnitt und mit einem sich hieraus ergebenden Innenraum ausgebildet ist. Durch den c-förmigen Querschnitt weist das Kunststofflängsprofil einen in Längsrichtung des Kunststofflängsprofils verlaufenden Längsspalt auf. Üblicher Weise ist das Kunststofflängsprofil so aufgehängt, dass der Längsspalt nach unten weist und das Kunststofflängsprofil somit nach unten offen ist. Im Innenraum des Kunststofflängsprofils sind in Längsrichtung des Kunststofflängsprofils verlaufende Halteelemente angeordnet, in die Stromschienen aus Kupfer eingezogen sind. Über die Stromschienen werden die bewegbaren elektrischen Verbraucher mit Strom oder Steuersignalen versorgt. Hierfür ist im Innenraum des Kunststofflängsprofils ein Stromabnehmerwagen in und entgegen der Längsrichtung des Kunststofflängsprofils über Laufrollen auf Fahrbahnen im Innenraum des Kunststofflängsprofils verfahrbar. An dem Stromabnehmerwagen sind einerseits Schleifleitungskontakte und andererseits eine elektrische Leitung angeordnet, die über den Längspalt nach außen zu dem elektrischen Verbraucher geführt ist. Die Schleifleitungskontakte stehen federnd vorgespannt jeweils mit einer der Stromschienen in Kontakt.

Um die Enden von zwei Schleifleitungen zu verbinden, werden zunächst die aus den Enden der Kunststofflängsprofile heraus ragenden Enden der Stromschienen über Stromschienenverbinder miteinander verbunden. Hierbei verbleibt zwischen den Enden der Künststofflängsprofile ein Querspalt, um die voneinander verschiedenen thermischen Ausdehnungen der Stromschienen und der Kunststofflängsprofile ausgleichen zu können. Dann kommt ein in zwei Gehäusehälften quer geteilter Verbinder zum Einsatz, der im Wesentlichen die Aufgaben hat, einen Berührungsschutz in Bezug auf die Stromschienenverbinder zu bieten, etwaige unterschiedliche thermische Ausdehnungen der Stromschienen und der Kunststofflängsprofile zu zulassen und einen Spalt zwischen den Enden der Kunststofflängsprofile im Bereich der Fahrbahnen für den Stromabnehmerwagen zu überbrücken. Die Gehäusehälften des Verbinders werden auf die gegenüber liegenden Ende der zu verbindenden Kunststoffprofile aufgeschoben, dann werden die Stromschienen über die Stromschienenverbinder verbunden und anschließend die beiden Gehäusehälften aufeinander zu geschoben, bis diese über Rastverbindungen miteinander verbunden werden und die Stromschienenverbinder sicher überdecken. Die miteinander verbundenen Gehäusehälften bleiben innerhalb vorgegebener Grenzen relativ zu den beiden verbundenen Kunststoffprofilen verschiebbar, um thermische Längenänderungen der Kunststoffprofile ausgleichen zu können. Damit der Verbinder seine vorgenannten Aufgaben erfüllen kann, sind an den Enden der Kunststoffschienen Schlitze, Langlöcher, Ausnehmungen und Vorsprünge vorgesehen. Die Langlöcher dienen dazu, die Gehäusehälften des Verbinders innerhalb vorgegebener Grenzen relativ zu den beiden verbundenen Kunststoffprofilen verschiebbar an den Kunststoffprofilen zu befestigen. Die Ausnehmungen und Vorsprünge überbrücken den Querspalt im Bereich der Fahrbahn zwischen den beiden Kunststoffprofilen. Die Schlitze dienen dazu die Halteteile der zueinander benachbarten Stromschienenverbinder elektrisch zu isolieren.

Des Weiteren ist aus der Patentschrift US 2 961 499 bereits eine weitere Anordnung zum Verbinden von Schleifleitungsschienen bekannt. Die Schleifleitungsschienen bestehen im Wesentlichen aus mehreren parallel zueinander verlaufenden Stromschienen, die in einer nach unten offenen Abdeckschiene aus Blech angeordnet sind. Um die Enden der Stromschienen elektrisch miteinander zu verbinden, sind Stromschienenverbinder vorgesehen, die klemmend an den Enden der Stromschienen befestigt sind und in deren Mitte ein flexibler Bereich angeordnet ist, der als Litze ausgebildet ist. Die Abdeckschiene besteht in deren Längsrichtung gesehen aus einzelnen Abschnitten, die über u-förmige Verbindungselemente miteinander verschraubt sind. Hierfür weist jedes der Verbindungselemente in etwa die Kontur der Abdeckschiene auf, ist in den Bereich eines Endes soweit in die Abdeckschiene einschiebbar, dass dieser Abschnitt der Abdeckschiene mit der Verbindungschiene verschraubt werden kann und eine ausreichende Länge des Verbindungselements aus der Abdeckschiene herausragt, um den nachfolgenden Abschnitt der Abdeckschiene aufzustecken und hieran fest zu schrauben. Auch kann ein kürzerer Abschnitt der Abdeckschiene im Bereich der Stromschienenverbinder angeordnet werden und somit die Funktion einer Abdeckung im Bereich der Stromschienenverbinder übernehmen.

Weitere Anordnungen zum Verbinden von zwei aufeinander folgenden Schleifleitungsschienen sind auch aus der deutschen Offenlegungsschrift DE 102 27 079 A1, der Patentschrift US 2 835 752 A sowie aus der JP 55 112416 U bekannt.

Der Erfindung liegt die Aufgabe zugrunde, eine Anordnung zum Verbinden von zwei aufeinander folgenden Schleifleitungsschienen zu schaffen, die einfach herzustellen ist sowie eine unkomplizierte Montage ermöglicht.

Diese Aufgabe wird durch eine Anordnung zum Verbinden von zwei aufeinander folgenden Schleifleitungsschienen mit den im Anspruch 1 angegebenen Merkmalen gelöst. Vorteilhafte Ausgestaltungen dieser Anordnung sind in den Unteransprüchen 2 bis 8 beschrieben.

Erfindungsgemäß wird bei einer Anordnung zum Verbinden von zwei aufeinander folgenden Schleifleitungsschienen, die jeweils aus einem Kunststofflängsprofil und aus mindestens einer daran entlang verlaufenden Stromschiene bestehen, mit mindestens einem die gegenüber liegenden Stromschienenenden der Stromschienen von zwei aufeinander folgenden Schleifleitungsschienen verbindenden Stromschienenverbinder, der die Stromschienenenden der Stromschienen elektrisch und mechanisch verbindet, und mit an den gegenüber liegenden Schienenenden der Schleifleitungsschienen von zwei aufeinander folgenden Schleifleitungsschienen befestigten Zusatzelementen, die die Stromschienenverbinder überdecken, eine einfache Herstellung der Schleifleitungsschienen sowie deren unkomplizierte Montage, dadurch erreicht, dass an jedem der gegenüber liegenden Schienenenden der zu verbindenden Schleifleitungsschienen ein Zwischenelement befestigt ist und an den Zwischenelementen die Zusatzelemente befestigt sind, die relativ zu den Zwischenelementen in dessen Längsrichtung verschiebbar sind. Hierdurch können die Schleifleitungsschienen einfach vor Ort gerade abgelängt werden, d. h. quer zu der Längserstreckung der Schleifleitungsschienen, und die aufsteckbaren Zwischenelemente bieten dann die erforderliche Ausgestaltung zur Aufnahme der Zusatzelemente. Die Schleifleitungsschienen werden somit nach Art eines Baukastensystems aufgebaut und bestehen aus dem Kunststofflängsprofil, dem Zwischenelement und dem Zusatzelement. Es kann somit vermieden werden, dass für die Bearbeitung der Enden Kunststofflängsprofil computergesteuerten Fräsmaschinen zur Bearbeitung der Enden angeschafft und betrieben werden. Auf eine werkseitige Erstellung der Fräsungen kann verzichtet werden. Sonderlängen der Kunststofflängsprofil können einfach vor Ort zugesägt werden. Das Zwischenelement hat somit die Funktion eines Adapters zwischen Schleifleitungsschiene und Zusatzelement. Dadurch dass nur der Stromschienenverbinder die gegenüber liegenden Stromschienenenden der Stromschienen elektrisch und mechanisch verbindet, können die unterschiedlichen Wärme-Ausdehnungskoeffizienten von den Stromschienen, die vorzugsweise aus Kupfer sind, und den Kunststofflängsprofile, die vorzugsweise aus PVC sind, die etwa um den Faktor neun bis zwölf voneinander abweichen, ausgeglichen werden.

Eine einfache Montage der Zwischenelemente wird dadurch erreicht, dass jedes Zwischenelement hülsenförmig ausgebildet ist, auf das Schienenende der Schleifleitungsschiene aufgeschoben ist und über Befestigungselemente an dem Schienenende der Schleifleitungsschiene befestigt ist.

Dadurch dass jedes Zwischenelement aus einem Aufsteckabschnitt und einem sich hieran anschließenden Schienenabschnitt besteht, das der Schienenabschnitt einen dem Kunststofflängsprofil der Schleifleitungsschienen entsprechenden Querschnitt aufweist und in dem Schienenabschnitt in Längsrichtung des Zwischenelements ausgerichtete Langlöcher angeordnet sind, in die an der Innenseite des Zusatzelements angeordnete Vorsprünge in der Art eingreifen, dass das Zusatzelement an dem Zwischenelement gehalten ist, kann vermieden werden, die Stromschienenenden aufwendig zu bearbeiten.

Die aufwendige Bearbeitung der Stromschienenenden kann weiter dadurch minimiert werden, dass in dem Schienenabschnitt in Längsrichtung des Zwischenelements ausgerichtete Schlitze angeordnet sind, die zu dem dem Aufsteckabschnitt gegenüber liegenden Anfang des Schienenabschnitts offen sind, und in die Schlitze an dem Zusatzelement angeordnete Trennwände für eine elektrische Isolierung der Stromschienenverbinder voneinander eingeschoben sind.

Konstruktiv besonders vorteilhaft ist vorgesehen, dass die Kunststoffprofilschienen, die Zusatzelemente und die Zwischenelemente jeweils einen c-förmigen Querschnitt mit einem Innenraum und einem in deren Längsrichtung verlaufenden Längsspalt aufweisen sowie beidseitig an den Längsspalt angrenzend Fahrbahnen für einen Stromabnehmerwagen verlaufen.

Nochmals kann die aufwendige Bearbeitung der Stromschienenenden dadurch minimiert werden, dass in dem Schienenabschnitt in Längsrichtung des Zwischenelements im Bereich der Fahrbahnen ausgerichtete Fahrbahnschlitze angeordnet sind, zwischen den gegenüber liegenden Anfängen der miteinander über die Stromschienenverbinder verbundenen Zwischenelemente ein Spalt vorhanden ist, der über in dem Innenraum der Zusatzelemente angeordnete Fahrbahnstege überbrückt wird, wobei die Fahrbahnstege in die Fahrbahnschlitze hinein ragen.

Weiterhin konstruktiv besonders vorteilhaft ist, dass die Zusatzelemente in Längsrichtung der Kunststoffprofilschiene gesehen quer verlaufende und gegenüberliegende Anlageflächen aufweisen, die über eine Rastverbindung miteinander verbunden sind.

Die Herstellung der Kunststofflängsprofile, der Zwischenelemente und der Zusatzelemente wird dadurch erleichtert, da diese Kunststoffspritzgießteile sind. Das aufwendige Fräsen der Schlitze, der Langlöcher und Fahrbahnschlitze entfällt somit.

Nachfolgend wird die Erfindung an Hand eines in einer Zeichnung dargestellten Ausführungsbeispiels näher beschrieben. Es zeigen:
Figur 1 eine perspektivische Ansicht einer Anordnung zum Verbinden von zwei aufeinander folgenden Schleifleitungsschienen,
Figur 2 eine perspektivische Ansicht eines Endes einer Schleifleitungsschiene mit einem aufgesteckten Zwischenelement,
Figur 3 eine perspektivische Ansicht gemäß Figur 2 mit einem auf das Zwischenelement aufgesteckten Zusatzelement,
Figur 4 eine Vorderansicht von Figur 3 und
Figur 5 eine perspektivische Ansicht gemäß Figur 3 mit Stromschienen einer sich anschließenden Schleifleitungsschiene.

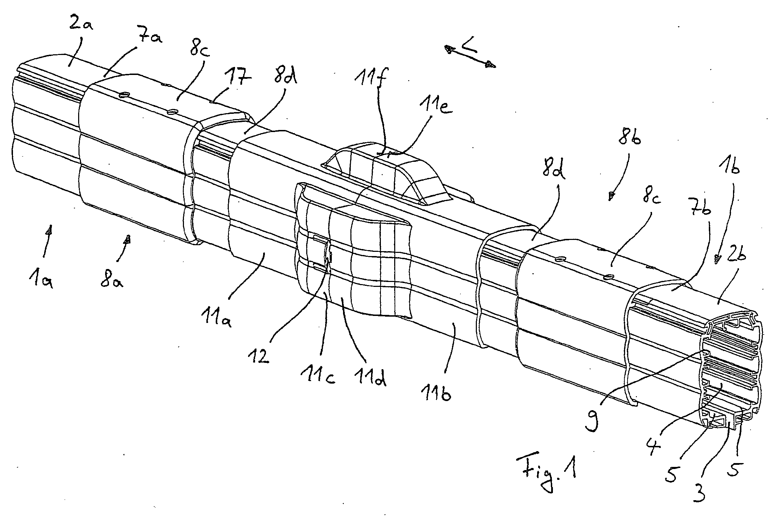

Die Figur 1 zeigt eine perspektivische Ansicht einer Anordnung zum Verbinden einer ersten Schleifleitungsschiene 1a mit einer zweiten Schleifleitungsschiene 1b. Derartige Schleifleitungsschienen 1a, 1b kommen üblicherweise zum Einsatz, wenn nicht dargestellte bewegbare elektrische Verbraucher wie beispielsweise eine Kranlaufkatze, die einen elektrischen Fahrantrieb und einen elektrischen Hubantrieb aufweist, mit elektrischer Energie versorgt werden müssen.

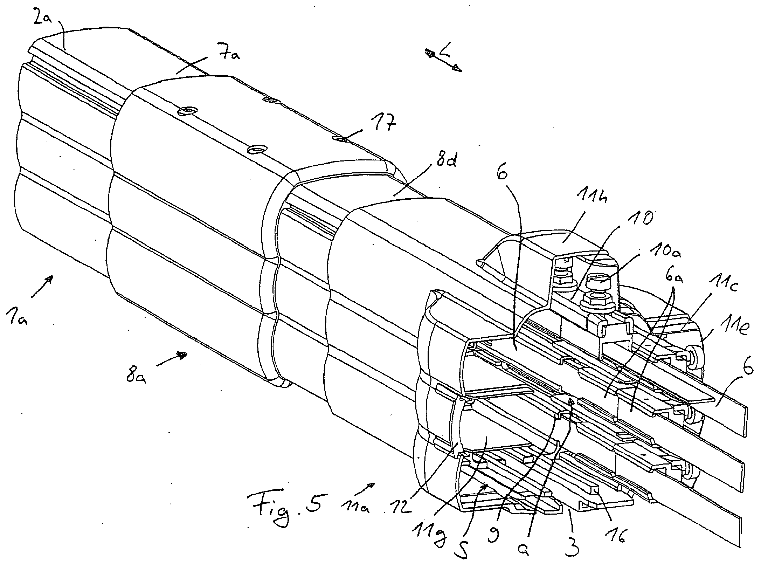

Die erste und zweite Schleifleitungsschiene 1a, 1b bestehen jeweils im Wesentlichen aus einem ersten Kunststofflängsprofil 2a und einem zweiten Kunststofflängsprofil 2b. Die Kunststofflängsprofile 2a, 2b sind als hohle Strangpressprofile ausgebildet und weisen einen c-förmigen Querschnitt mit einem in Längsrichtung L der Kunststofflängsprofile 2a, 2b verlaufenden Längsspalt 3 und einem Innenraum 4 auf. Üblicherweise sind die Kunststofflängsprofile 2a, 2b für den Betrieb so aufgehängt, dass der Längsspalt 3 nach unten weist und die an den Längsspalt 3 rechts und links in dem Innenraum 4 angrenzenden Fahrspuren 5 im Wesentlichen horizontal ausgerichtet sind. Auf den Fahrspuren 5 rollen sogenannte Schleifleitungswagen ab, die einerseits über eine elektrische Leitung mit dem bewegbaren elektrischen Verbraucher verbunden sind und andererseits über Schleifleitungskontakte entlang von Stromschienen 6 (siehe Figur 5) gleiten, die im Innenraum 4 in Längsrichtung L der Schleifleitungsschienen 1a, 1b verlaufen.

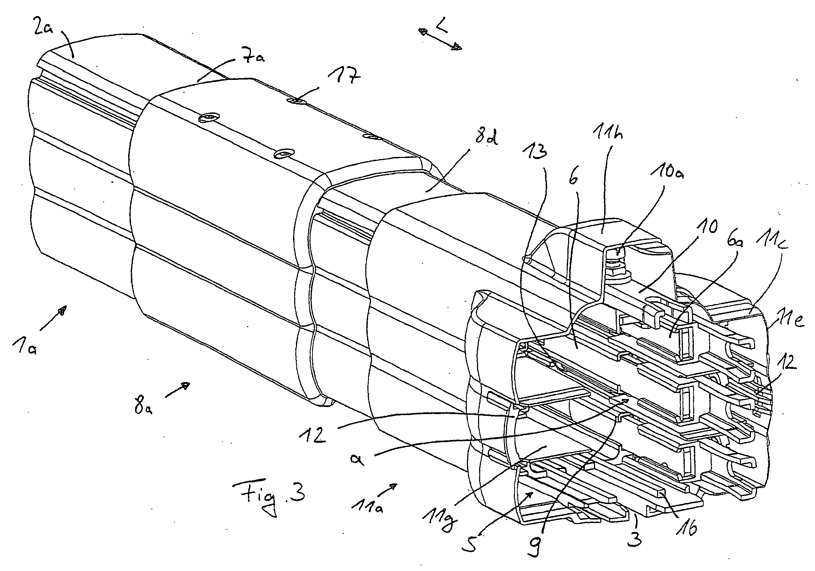

Um die beiden in Längsrichtung L fluchtend zueinander ausgerichteten ersten und zweiten Schleifleitungsschienen 1a und 1b miteinander verbinden zu können, sind ein erstes Schienenende 7a der ersten Schleifleitungsschiene 1a mit einem ersten Zwischenelement 8a und ein zweites Schienenende 7b der zweiten Schleifleitungsschiene 1 b mit einem zweiten Zwischenelement 8b verbunden. Jeder der ersten und zweiten Zwischenelemente 8a und 8b besteht in Längsrichtung L gesehen aus einem Aufsteckabschnitt 8c und sich einen hieran anschließenden Schienenabschnitt 8d. Der Aufsteckabschnitt 8c weist eine Innenkontur auf, die derart ausgebildet ist, dass sie der Außenkontur der Schleifleitungsschiene 1a, 1b entspricht und somit formschlüssig in Längsrichtung L der Schleifleitungsschienen 1 a und 1 b aufgeschoben werden kann. Dem gegenüber weist der Schienenabschnitt 8d eine Außenkontur, eine Innenkontur und eine Querschnittsform auf, die den Schienenenden 7a, 7b der Schleifleitungsschienen 1a, 1b entspricht. Im Zuge der Verbindung der Schleifleitungsschienen 1 a und 1 b miteinander werden anschließend die Stromschienen 6 in die in dem Innenraum 4 vorgesehenen Halterungen 9 in der gewünschten Anzahl in Längsrichtung L eingeschoben, ragen leicht aus den Schienenabschnitten 8d der Zwischenelemente 8a, 8b hervor und werden nach Bedarf entsprechend abgelängt. Dann wird über einen Stromschienenverbinder 10 das erste Stromschienenende 6a und das zweite Stromschienenende 6b der ersten und zweiten Schleifleitungsschiene 1 a, 1 b miteinander verbunden. Hierbei verbleibt zwischen den gegenüberliegenden Anfängen 6e der Aufsteckabschnitte 8c ein Spalt S (siehe Figur 3). Die mechanische und elektrische Verbindung der ersten und zweiten Schleifleitungsschiene 1 a, 1 b erfolgt somit über die Stromschienenverbinder 10 und die zugehörigen Stromschienen 6. Hierdurch ist es möglich, die unterschiedlichen Wärme-Ausdehnungskoeffizienten von den Stromschienen 6, die vorzugsweise aus Kupfer sind, und den Kunststofflängsprofile 2a, 2b, die vorzugsweise aus PVC sind, die etwa um den Faktor neun bis zwölf voneinander abweichen, auszugleichen.

Um die Stromschienenverbinder 10 im Sinne eines Berührungsschutzes zu überdecken, werden vor der Montage der Stromschienenverbinder 10 auf den Schienenabschnittes 8d des ersten Zwischenelements 8a ein erstes Zusatzelement 11 a und auf den Schienenabschnittes 8d des zweiten Zwischenelements 8a ein zweites Zusatzelement 11 b in eine Montagestellung aufgeschoben. Diese Zusatzelemente 11a, 11 b weisen eine Innenkontur auf, die so an die Außenkontur des Schienenabschnittes 8d der Zwischenelemente 8a, 8b angepasst ist, dass die Zusatzelemente 11a, 11 b in Längsrichtung L auf den Schienenabschnitten 8d der Zwischenelemente 8a, 8b verschoben werden können. Nachdem die Schleifleitungsschienen 1a, 1b über die Stromschienenverbinder 10 miteinander verbunden sind, werden das erste Zusatzelement 11a und das zweite Zusatzelement 11 b in Längsrichtung L aufeinander in eine Betriebsstellung zugeschoben, bis diese mit ihren gegenüberliegenden ersten Zusatzelementende 11c und dem zweiten Zusatzelementende 11 d bündig einander anliegen. Die Zusatzelementenden 11c, 11d weisen quer zur Längsrichtung L ausgerichtete erste Anlageflächen 11 e und zweite Anlageflächen 11f auf. In der Betriebsstellung, in denen die erste Anlagefläche 11e und die zweite Anlagefläche 11f aneinander anliegen, werden das erste und zweite Zusatzelement 11 a, 11 b über Rastverbindungen 12 in der Betriebsstellung gehalten.

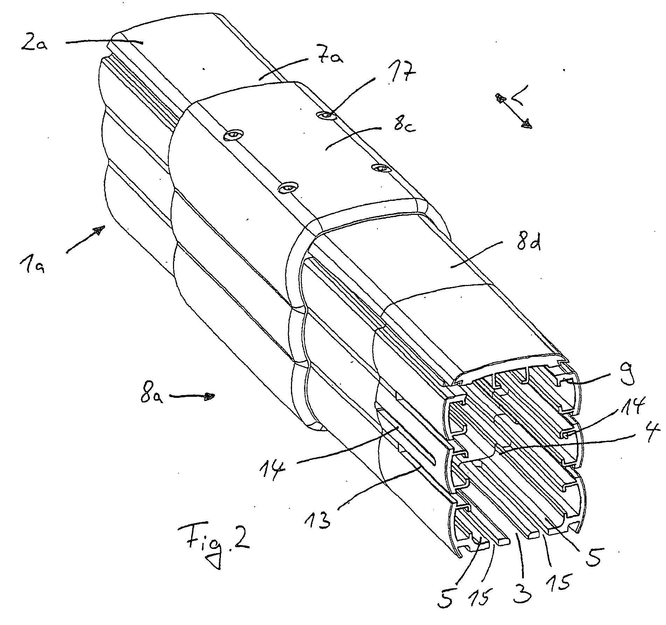

In der Figur 2 ist eine Ansicht auf das erste Schienenende 7a der ersten Schleifleitungsschiene 1a mit einem aufgesteckten ersten Zwischenelement 8a gezeigt. Da in dieser Ansicht das erste Zusatzelement 11a noch nicht montiert ist, kann aus dieser Ansicht der detaillierte Aufbau des Endes des Aufsteckabschnittes 8c des ersten Zwischenelementes 8a erkannt werden. Der Aufsteckabschnitt 8c des zweiten Zwischenelementes 8b ist entsprechend ausgebildet. Der Schienenabschnitt 8d weist einen Innenraum 4 auf, der dem Innenraum 4 der Schleifleitungsschienen 1a, 1 b entspricht. Insbesondere sind an den seitlichen Wänden und der oberen Wand in Richtung des Innenraums 4 offene und nach innen ragende c-förmige Halterungen 9 zu erkennen. Es sind drei Halterungen 9 an den gegenüberliegenden seitlichen Wänden des Innenraums 4 angeordnet und eine weitere an der oberen Wand des Innenraums 4. Die Halterungen 9 weisen eine im Wesentlichen c-förmigen und rechteckigen Querschnitt auf und dienen zur Aufnahme der in der Figur 2 nicht dargestellten und flachprofilförmigen Stromschienen 6, die in Längsrichtung L in die Halterungen 9 eingeschoben werden und von diesen formschlüssig durch die c-förmige Ausgestaltung gehalten werden. An den seitlichen Wänden des Innenraumes 4 sind drei Halterungen 9 übereinander angeordnet. Zwischen der ersten und zweiten und der zweiten und dritten Halterung 9 sind jeweils in Längsrichtung L ausgerichtete Schlitze 13 angeordnet, die ausgehend vom Anfang 8e des Schienenabschnittes 8d etwa ein Drittel der Länge des Schienenabschnittes 8d in den Schienenabschnittes 8d hineinragen. Diese Schlitze 13 dienen dazu eine Trennwand 11g der Zusatzelemente 11a, 11b aufzunehmen, die im Wesentlichen horizontal ausgerichtet ist und die Stromschienenverbinder 10 elektrisch voneinander isoliert. Zwischen den Schlitzen 13 ist in der Seitenwand des Schienenabschnittes 8d ein weiteres Langloch 14 vorgesehen, das sich ebenfalls in Längsrichtung L des Schienenabschnittes 8d erstreckt. In dieses Langloch 14, das auch auf der gegenüberliegenden Seite des Schienenabschnittes 8d vorgesehen ist, greift formschlüssig ein nach innen ragender Vorsprung der Zusatzelemente 11a, 11 b ein und ermöglicht so, die Zusatzelemente 11a, 11b verliersicher auf den Schienenabschnitt 8d aufzustecken und gleichzeitig in Längsrichtung L verschiebbar zu halten, um diesen bei der nachfolgenden Verbindung der Schleifleitungsschienen 1a, 1b und der Überdeckung der Stromschienenverbinder 10 über die Zusatzelemente 11 a, 11 b aufeinander zu schieben können.

Des Weiteren zeigt die Figur 2 im Bereich der an den Längsspalt 3 angrenzenden Fahrbahnen 5 Fahrbahnschlitze 15, die zentral im Bereich der Fahrbahn 5 verlaufen und sich ebenfalls in Längsrichtung L erstrecken. Da wie zuvor beschrieben im miteinander verbundenen Betriebszustand der Schleifleitungsschienen 1a, 1b zwischen den gegenüberliegenden Enden der Zwischenelemente 8a und 8b ein Spalt S verbleibt, dessen Breite etwa der Länge der Stromschienenverbinder 10 entspricht, ist dieser Spalt S zwischen den Fahrbahnen 5 über das Zusatzelement 11 zu überbrücken. Hierfür weist das Zusatzelement 11 auch einen Fahrbahnabschnitt auf, der in Form eines Fahrbahnsteges 16 ausgebildet ist, der im Betriebszustand der Zusatzelemente 11 a, 11 b in die Fahrbahnschlitze 15 der gegenüberliegenden Schienenabschnitte 8d hinein ragt.

Außerdem ist aus der Figur 2 zu erkennen, dass das auf das Kunststofflängsprofil 2a mit seinem Aufsteckabschnitt 8c aufgeschobene Zwischenelement 8a über Befestigungselemente 17 in Form von Schrauben an dem Kunststofflängsprofil 2a befestigt ist. Die Befestigungselemente 17 verklemmen das Zusatzelement 11a, 11b auf dem Aufsteckabschnitt 8c.

In der Figur 3 ist eine der Figur 2 entsprechende Ansicht des ersten Schienenendes 7a der ersten Schleifleitungsschiene 1a mit aufgestecktem ersten Zwischenelement 8a gezeigt, wobei zusätzlich das erste Zusatzelement 11a zur Überdeckung der Stromschienenverbinder 10 aufgesteckt ist. Auch sind in einem Teil der Halterungen 9 bereits die Stromschienen 6 hineingeschoben, deren erste Stromschienenenden 6a aus den Halterungen 9 des Aufsteckabschnittes des ersten Zwischenelementes 8a hinausragen. Auf diese ersten Stromschienenenden 6a sind bereits die Stromschienenverbinder 10 aufgeschoben und mit diesen verschraubt. Es ist ersichtlich, dass zwischen den Stromschienenverbindern 10 und dem Anfang 8e des Aufsteckabschnittes 8c ein Abstand a verbleibt.

Auch ist ersichtlich, dass das erste Zusatzelement 11 a im Bereich seines ersten Zusatzelementendes 11c nach außen gerichtete Ausbauchungen 11 h aufweist, um die Stromschienenverbinder 10, insbesondere deren Klemmschraube 10a, zu überdecken. Das zweite Zusatzelement 11 b ist entsprechend ausgebildet.

Ferner zeigt die Figur 3 im Bereich der Fahrbahnen 5, die in die Fahrbahnschlitze 15 in deren Längsrichtung L hinein ragenden Fahrbahnstege 16. Auch zeigt die Figur 3, dass die Trennwände 11 e des ersten Zusatzelementes 11 a nach innen ragen, horizontal ausgerichtet sind und im Betriebszustand des ersten Zusatzelementes 11 a die Stromschienenverbinder 10 von benachbart und übereinander angeordneten Stromschienen 6 mechanisch und elektrisch voneinander isolieren. Hierbei ragen die Trennwände 11 g in die Schlitze 13 des Schienenabschnittes 8d des ersten Zwischenelementes 8a. Entsprechendes gilt für das zweite Zusatzelement 11 b.

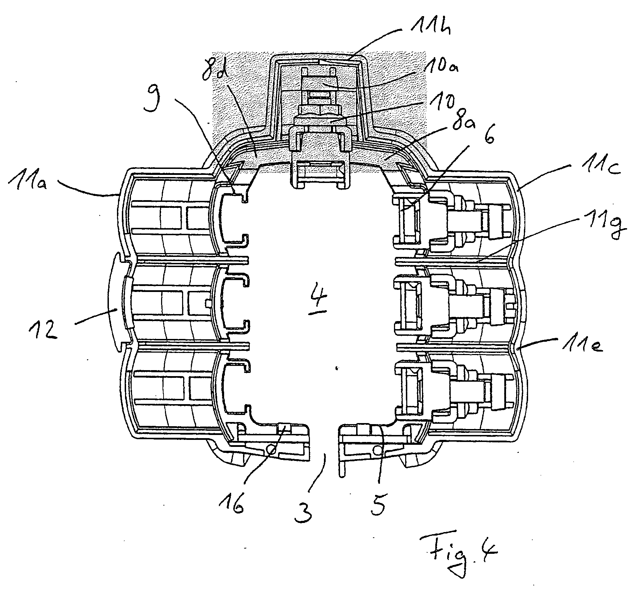

Die Figur 4 zeigt eine Vorderansicht von Figur 3, also auf das Ende des ersten Zusatzelementes 11a auf dem Schienenabschnitt 8d des ersten Zwischenelementes 8. Hieraus ist besonders gut in der rechten Hälfte der Figur 4 zu erkennen, dass die horizontal ausgerichteten Trennwände 11g des ersten Zusatzelementes 11a die übereinander angeordneten Stromschienenverbinder 10 elektrisch und mechanisch voneinander trennen.

In der Figur 5 ist eine perspektivische Ansicht entsprechend der Figur 3 dargestellt. Zum besseren Verständnis sind hier jedoch die Stromschienen 6 der sich hieran anschließenden zweiten Schleifleitungsschiene 11 b abschnittsweise dargestellt. Diese Stromschienen 6 sind in die Stromschienenverbinder 10 eingesteckt und dort befestigt. Aus dieser Ansicht lässt sich erkennen, dass zwischen den Anfängen 8e des ersten und zweiten Zwischenelementes 8a und 8b ein Spalt S verbleibt, der nur von den Stromschienen 6 und den Stromschienenverbindern 10 überbrückt wird sowie von dem ersten und zweiten Zusatzelement 11 a, 11 b überdeckt wird.

### Bezugszeichenliste

- 1a: erste Schleifleitungsschiene
- 1b: zweite Schleifleitungsschiene
- 2a: erstes Kunststofflängsprofil
- 2b: zweites Kunststofflängsprofil
- 3: Längsspalt
- 4: Innenraum
- 5: Fahrbahn
- 6: Stromschienen
- 6a: erstes Stromschienenende
- 6b: zweites Stromschienenende
- 7a: erstes Schienenende
- 7b: zweites Schienenende
- 8a: erstes Zwischenelement
- 8b: zweites Zwischenelement
- 8c: Aufsteckabschnitt
- 8d: Schienenabschnitt
- 8e: Anfang
- 9: Halterung
- 10: Stromschienenverbinder
- 10a: Klemmschraube
- 11a: erstes Zusatzelement
- 11b: zweites Zusatzelement
- 11c: erstes Zusatzelementende
- 11d: zweites Zusatzelementende
- 11e: erste Anlagefläche
- 11f: zweite Anlagefläche
- 11g: Trennwand
- 11h: Ausbauchung
- 12: Rastverbindung
- 13: Schlitz
- 14: Langloch
- 15: Fahrbahnschlitz
- 16: Fahrbahnsteg
- 17: Befestigungselement

- a: Abstand
- L: Längsrichtung
- S: Spalt

## Patentansprüche

1. Anordnung zum Verbinden von zwei aufeinander folgenden Schleifleitungsschienen, die jeweils aus einem Kunststofflängsprofil und aus mindestens einer daran entlang verlaufenden Stromschiene bestehen, mit mindestens einem die gegenüber liegenden Stromschienenenden der Stromschienen von zwei aufeinander folgenden Schleifleitungsschienen verbindenden Stromschienenverbinder, der die Stromschienenenden der Stromschienen elektrisch und mechanisch verbindet, und mit an den gegenüber liegenden Schienenenden der Schleifleitungsschienen von zwei aufeinander folgenden Schleifleitungsschienen befestigten Zusatzelementen, die die Stromschienenverbinder überdecken, **dadurch gekennzeichnet, dass** an jedem der gegenüber liegenden Schienenenden (7a, 7b) der zu verbindenden Schleifleitungsschienen (1a, 1 b) ein Zwischenelement (8a, 8b) befestigt ist und an den Zwischenelementen (8a, 8b) die Zusatzelemente (11 a, 11b) befestigt sind, die relativ zu den Zwischenelementen in dessen Längsrichtung verschiebbar sind.

2. Anordnung nach Anspruch 1, **dadurch gekennzeichnet, dass** jedes Zwischenelement (8a, 8b) hülsenförmig ausgebildet ist, auf das Schienenende (7a, 7b) der Schleifleitungsschiene (1a, 1b) aufgeschoben ist und über Befestigungselemente (17) an dem Schienenende (7a, 7b) der Schleifleitungsschiene (1a, 1b) befestigt ist.

3. Anordnung nach Anspruch 1 oder 2, **dadurch gekennzeichnet, dass** jedes Zwischenelement (8a, 8b) aus einem Aufsteckabschnitt (8c) und einem sich hieran anschließenden Schienenabschnitt (8d) besteht, das der Schienenabschnitt (8d) einen dem Kunststofflängsprofil (2a, 2b) der Schleifleitungsschienen (1a, 1b) entsprechenden Querschnitt aufweist und in dem Schienenabschnitt (8d) in Längsrichtung (L) des Zwischenelements (8a, 8b) ausgerichtete Langlöcher (14) angeordnet sind, in die an der Innenseite des Zusatzelements (11a, 11b) angeordnete Vorsprünge in der Art eingreifen, dass das Zusatzelement (11 a, 11 b) an dem Zwischenelement (8a, 8b) gehalten ist.

4. Anordnung nach Anspruch 3, **dadurch gekennzeichnet, dass** in dem Schienenabschnitt (8d) in Längsrichtung (L) des Zwischenelements (8a, 8b) ausgerichtete Schlitze (13) angeordnet sind, die zu dem dem Aufsteckabschnitt (8c) gegenüber liegenden Anfang (8e) des Schienenabschnitts (8a, 8b) offen sind, und in die Schlitze (13) an dem Zusatzelement (11 a, 11 b) angeordnete Trennwände (11 g) für eine elektrische Isolierung der Stromschienenverbinder (10) voneinander eingeschoben sind.

5. Anordnung nach einem der Ansprüche 1 bis 4, **dadurch gekennzeichnet, dass** die Kunststoffprofilschienen (2a, 2b), die Zusatzelemente (11 a, 11 b) und die Zwischenelemente (8a, 8b) jeweils einen c-förmigen Querschnitt mit einem Innenraum (4) und einem in deren Längsrichtung (L) verlaufenden Längsspalt (3) aufweisen sowie beidseitig an den Längsspalt (3) angrenzend Fahrbahnen (5) für einen Stromabnehmerwagen verlaufen.

6. Anordnung nach Anspruch 5, **dadurch gekennzeichnet, dass** in dem Schienenabschnitt (8d) in Längsrichtung (L) des Zwischenelements (11 a, 11 b) im Bereich der Fahrbahnen (5) ausgerichtete Fahrbahnschlitze (15) angeordnet sind, zwischen den gegenüber liegenden Anfängen (8e) der miteinander über die Stromschienenverbinder (10) verbundenen Zwischenelemente (8a, 8b) ein Spalt (S) vorhanden ist, der über in dem Innenraum (4) der Zusatzelemente (8a, 8b) angeordnete Fahrbahnstege (16) überbrückt wird, wobei die Fahrbahnstege (16) in die Fahrbahnschlitze (15) hinein ragen.

7. Anordnung nach einem der Ansprüche 1 bis 6, **dadurch gekennzeichnet, dass** die Zusatzelemente (11a, 11b) in Längsrichtung (L) der Kunststoffprofilschiene (2a, 2b) gesehen quer verlaufende und die gegenüberliegenden Anlageflächen (11e, 11f) aufweisen, die über eine Rastverbindung (12) miteinander verbunden sind.

8. Anordnung nach einem der Ansprüche 1 bis 7, **dadurch gekennzeichnet, dass** die Kunststofflängsprofile (2a, 2b), die Zwischenelemente (8a, 8b) und die Zusatzelemente (11a, 11b) als Kunststoffspritzgießteile hergestellt sind.

## Claims

1. Arrangement for connecting two successive contact line rails which each consist of a longitudinal plastics profile and at least one contact rail extending therealong, having at least one contact rail connector which connects the opposite contact rail ends of the contact rails of two successive contact line rails and electrically and mechanically connects the contact rail ends of the contact rails, and having additional elements which are attached to the opposite rail ends of the contact line rails of two successive contact line rails and cover the contact rail connectors, **characterised in that** an intermediate element (8a, 8b) is attached to each of the opposite rail ends (7a, 7b) of the contact line rails (1 a, 1 b) to be connected, and the additional elements (11 a, 11 b) are attached to the intermediate elements (8a, 8b) and are displaceable relative to the intermediate elements in the longitudinal direction thereof.

2. Arrangement as claimed in claim 1, **characterised in that** each intermediate element (8a, 8b) is formed in the manner of a sleeve, is slid onto the rail end (7a, 7b) of the contact line rail (1 a, 1b) and is attached to the rail end (7a, 7b) of the contact line rail (1 a, 1 b) via fastening elements (17).

3. Arrangement as claimed in claim 1 or 2, **characterised in that** each intermediate element (8a, 8b) consists of an attachment portion (8c) and a rail portion (8d) which adjoins it, that the rail portion (8d) has a cross-section corresponding to the longitudinal plastics profile (2a, 2b) of the contact line rails (1 a, 1 b) and disposed in the rail portion (8d) are long holes (14) which are aligned in the longitudinal direction (L) of the intermediate element (8a, 8b) and into which protrusions, which are disposed on the inner side of the additional element (11 a, 11 b), engage in such a manner that the additional element (11 a, 11 b) is held on the intermediate element (8a, 8b).

4. Arrangement as claimed in claim 3, **characterised in that** disposed in the rail portion (8d) are slots (13) which are aligned in the longitudinal direction (L) of the intermediate element (8a, 8b) and are open with respect to the beginning (8e) of the rail portion (8a, 8b) opposite the attachment portion (8c), and partition walls (11g) which are disposed on the additional element (11 a, 11 b) are inserted into the slots (13) for electrically insulating the contact rail connectors (10) from each other.

5. Arrangement as claimed in any one of claims 1 to 4, **characterised in that** the plastics profile rails (2a, 2b), the additional elements (11 a, 11 b) and the intermediate elements (8a, 8b) each have a c-shaped cross-section having an inner space (4) and a longitudinal gap (3), which extends in the longitudinal direction (L) thereof, and tracks (5) for a current collector trolley extend on both sides adjacent to the longitudinal gap (3).

6. Arrangement as claimed in claim 5, **characterised in that** track slots (15) which are aligned in the longitudinal direction (L) of the intermediate element (11 a, 11 b) in the region of the tracks (5) are disposed in the rail portion (8d), a gap (S) is present between the opposite beginnings (8e) of the intermediate elements (8a, 8b), which are connected together via the contact rail connectors (10), said gap being bridged by track webs (16) which are disposed in the inner space (4) of the additional elements (8a, 8b), wherein the track webs (16) protrude into the track slots (15).

7. Arrangement as claimed in any one of claims 1 to 6, **characterised in that** the additional elements (11 a, 11 b), as seen in the longitudinal direction (L) of the plastics profile rail (2a, 2b), have transversely extending and opposite-lying bearing surfaces (11 e, 11f) which are connected together via a latching connection (12).

8. Arrangement as claimed in any one of claims 1 to 7, **characterised in that** the longitudinal plastics profiles (2a, 2b), the intermediate elements (8a, 8b) and the additional elements (11 a, 11 b) are produced as injection-moulded plastics parts.

## Revendications

1. Dispositif de raccordement de deux rails de ligne de contact successifs qui sont chacun constitués d'un profilé longitudinal en matière plastique et d'au moins un rail conducteur s'étendant le long de celui-ci, ledit dispositif comprenant au moins un connecteur de rail conducteur qui relie les extrémités opposées des rails conducteurs de deux rails de ligne de contact successifs et qui relie électriquement et mécaniquement les extrémités des rails conducteurs, et des éléments supplémentaires qui sont fixés aux extrémités opposées des rails de ligne de contact de deux rails de ligne de contact successifs et qui recouvrent les connecteurs de rails conducteurs, **caractérisé en ce qu'**un élément intermédiaire (8a, 8b) est fixé à chacune des extrémités opposées (7a, 7b) des rails de ligne de contact (1 a, 1 b) à raccorder et **en ce que** les éléments supplémentaires (11, 11 b), qui peuvent être déplacés par rapport aux éléments intermédiaires dans leur direction longitudinale, sont fixés aux éléments intermédiaires (8a, 8b).

2. Dispositif selon la revendication 1, **caractérisé en ce que** chaque élément intermédiaire (8a, 8b) a une forme de manchon (7a, 7b), est mis en place par coulissement sur l'extrémité (7a, 7b) du rail de ligne de contact (1 a, 1 b) et est fixé à l'extrémité (7a, 7b) du rail de ligne de contact (1 a, 1 b) par des éléments de fixation (17).

3. Dispositif selon la revendication 1 ou 2, **caractérisé en ce que** chaque élément intermédiaire (8a, 8b) est constitué d'une partie de montage (8C) et d'une partie rail (8d) attenante à ladite partie de montage, **en ce que** la partie rail (8d) a une section transversale qui correspond au profilé longitudinal en matière plastique (2a, 2b) des rails de ligne de contact (1 a, 1b) et **en ce que** des trous oblongs (14) orientés dans la direction longitudinale (L) de l'élément intermédiaire (8a, 8b) sont ménagés dans la partie rail (8d), trous oblongs dans lesquels des saillies, disposées du côté intérieur de l'élément supplémentaire (11a, 11 b), s'engagent de telle manière que l'élément supplémentaire (11a, 11 b) est maintenu sur l'élément intermédiaire (8a, 8b).

4. Dispositif selon la revendication 3, **caractérisé en ce que** des fentes (13), orientées dans la direction longitudinale (L) de l'élément intermédiaire (8a, 8b), sont ménagées dans la partie rail (8d), lesquelles fentes sont ouvertes en direction du début (8e) de la partie rail (8a, 8b) qui se trouve face à la partie de montage (8c) et **en ce que** des parois de séparation (11g), disposées au niveau de l'élément supplémentaire (11a, 11 b) et destinées à isoler électriquement les connecteurs de rail conducteur (10) les uns des autres, sont insérées dans les fentes (13).

5. Dispositif selon l'une des revendications 1 à 4, **caractérisé en ce que** les profilés en matière plastique (2a, 2b), les éléments supplémentaires (11 a, 11 b) et les éléments intermédiaires (8a, 8b) ont chacun une section transversale en forme de C pourvue d'un espace intérieur (4) et d'une fente longitudinale (3) qui s'étend dans leur direction longitudinale (L) et **en ce que** des pistes de déplacement (5), adjacentes à la fente longitudinale (3) et destinées à un chariot collecteur de courant, s'étendent des deux côtés.

6. Dispositif selon la revendication 5, **caractérisé en ce que** des fentes de piste de déplacement (15), orientées dans la région des pistes de déplacement (5) dans la direction longitudinale (L) de l'élément intermédiaire (11 a, 11 b), sont ménagées dans la partie rail (8d), et **en ce que** une fente (S) est ménagée entre les débuts opposés (8e) des éléments intermédiaires (8a, 8b) raccordés entre eux par le biais des connecteurs de rail conducteur (10), laquelle fente (S) est recouverte par des nervures de piste de déplacement (16) disposées dans l'espace intérieur (4) des éléments supplémentaires (8a, 8b), les nervures de piste de déplacement (16) faisant saillie dans les fentes de piste de déplacement (15).

7. Dispositif selon l'une des revendications 1 à 6, **caractérisé en ce que** les éléments supplémentaires (11 a, 11b) possèdent des surfaces d'appui (11e, 11f) opposées qui s'étendent transversalement par référence à la direction longitudinale (L) du profilé en matière plastique (2a, 2b) et qui sont reliées entre elles par une liaison par encliquetage (12).

8. Dispositif selon l'une des revendications 1 à 7, **caractérisé en ce que** les profilés longitudinaux en matière plastique (2a, 2b), les éléments intermédiaires (8a, 8b) et les éléments supplémentaires (11 a, 11 b) sont fabriqués sous la forme de pièces de matière plastique moulées par injection.
